(19) **Europäisches Patentamt / European Patent Office / Office européen des brevets**

(11) **EP 4 668 835 A1**

(12) **EUROPEAN PATENT APPLICATION**
published in accordance with Art. 153(4) EPC

(43) Date of publication:
**24.12.2025 Bulletin 2025/52**

(21) Application number: **23922829.9**

(22) Date of filing: **04.09.2023**

(51) International Patent Classification (IPC):
**H04W 24/10** (2009.01)      **H04W 72/0446** (2023.01)
**H04W 84/06** (2009.01)

(52) Cooperative Patent Classification (CPC):
**H04W 24/10; H04W 72/0446; H04W 84/06**

(86) International application number:
**PCT/JP2023/032227**

(87) International publication number:
**WO 2024/171495 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2023   JP 2023023753**

(71) Applicant: **Panasonic Intellectual Property Corporation
of America
Torrance, CA 90504 (US)**

(72) Inventors:
• **NISHIO, Akihiko
  Kadoma-shi, Osaka 571-0057 (JP)**
• **SUZUKI, Hidetoshi
  Kadoma-shi, Osaka 571-0057 (JP)**

(74) Representative: **Grünecker Patent- und Rechtsanwälte
PartG mbB
Leopoldstraße 4
80802 München (DE)**

(54) **TERMINAL, BASE STATION, AND COMMUNICATION METHOD**

(57)    This terminal comprises a reception circuit that receives a report instruction regarding a time domain in which maintaining phase continuity and power consistency of uplink signals is required, and a control circuit that determines a periodic report regarding the time domain on the basis of the report instruction.

<u>100</u>

FIG. 2

## Description

Technical Field

The present disclosure relates to a terminal, a base station, and a communication method.

Background Art

In the standardization of 5G, New Radio access technology (NR) has been specified in 3GPP, and the Release 15 (Rel. 15) specification for NR has been published.

Citation List

Non-Patent Literature

NPL 1
3GPP, TR 38.821, V16.1.0 "Solutions for NR to support non-terrestrial networks (NTN) (Release 16)"NPL 2
3GPP, TS 38.214, V17.3.0 "NR; Physical layer procedures for data (Release 17)"

Summary of Invention

However, there is room for further study on a method for reporting a time domain in which phase continuity and power consistency in an uplink signal are maintained.

One non-limiting and exemplary embodiment of the present disclosure facilitates providing a terminal, a base station, and a communication method each capable of appropriately performing a report on a time domain in which phase continuity and power consistency in an uplink signal are maintained.

A terminal according to an exemplary embodiment of the present disclosure includes: reception circuitry, which, in operation, receives a report instruction regarding a time domain in which maintenance of phase continuity and power consistency in an uplink signal is required; and control circuitry, which, in operation, determines a report, which is periodic, on the time domain based on the report instruction.

It should be noted that general or specific embodiments may be implemented as a system, an apparatus, a method, an integrated circuit, a computer program, a storage medium, or any selective combination thereof.

According to an exemplary embodiment of the present disclosure, it is possible to appropriately perform a report on a time domain in which phase continuity and power consistency in an uplink signal are maintained.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating TDWs;
FIG. 2 is a block diagram illustrating an exemplary configuration of a part of a terminal;
FIG. 3 is a block diagram illustrating an exemplary configuration of a part of a base station;
FIG. 4 is a block diagram illustrating an example of a configuration of the terminal according to Embodiment 1;
FIG. 5 is a block diagram illustrating an example of a configuration of the base station according to Embodiment 1;
FIG. 6 is a flowchart illustrating exemplary operations of the terminal according to Embodiment 1;
FIG. 7 is a diagram illustrating exemplary operations of the terminal and the base station;
FIG. 8 is a diagram illustrating an exemplary architecture of a 3GPP NR system;
FIG. 9 is a schematic diagram illustrating functional split between NG-RAN and 5GC;
FIG. 10 is a sequence diagram of Radio Resource Control (RRC) connection setup/reconfiguration procedures;
FIG. 11 is a schematic diagram illustrating usage scenarios of enhanced Mobile Broadband (eMBB), massive Machine Type Communications (mMTC), and Ultra Reliable and Low Latency Communications (URLLC);

FIG. 12 is a block diagram illustrating an exemplary 5G system architecture for a non-roaming scenario;
FIG. 13 is a diagram illustrating an example of a report on possible TDWs; and
FIG. 14 is a diagram illustrating an example of a report on assistance information.

Description of Embodiments

Hereinafter, embodiments of the present disclosure will be described in detail with reference to the accompanying drawings.

<Regarding Non-Terrestrial Network (NTN)>

NR Rel. 15 has been specified as a radio access technology for terrestrial networks. Meanwhile, in NR, extension to non-terrestrial networks (NTNs) such as communication using a satellite or a High-altitude platform station (HAPS) has been studied (e.g., Non-Patent Literature (hereinafter referred to as "NPL") 1).

In an NTN environment, a satellite's coverage area (e.g., one or more cells) for a terrestrial terminal (also referred to as, e.g., user equipment (UE)) or a terminal located in airspace such as an aircraft or a drone is formed by beams transmitted from the satellite (also referred to as satellite beams). In addition, a round trip time (RTT) of radio wave propagation between a terminal and a satellite is determined by the altitude of the satellite (e.g., up to approximately 36000 km) and an angle viewed from the terminal, that is, the positional relation between the satellite and the terminal.

For example, NPL 1 describes that in NTN, the round trip time (RTT) of radio wave propagation between a base station (for example, a base station mounted in a satellite) and a terminal is up to approximately 540 ms.

Further, NPL 1 describes that in NTN, a differential delay up to approximately 10 ms (e.g., the difference between the farthest position and the closest position from a satellite in beam) arises according to the location of a terminal in a beam (or coverage area or cell).

In addition, for example, in the case of a non-geostationary satellite such as a Low-Earth Orbit Satellite (LEO), the amount of a propagation delay changes more rapidly than in a terrestrial network since the satellite moves at a high speed of approximately 7.6 km per second. Further, in NTN, a higher Doppler shift (or frequency shift) occurs than in a terrestrial network due to the high-speed satellite movement.

<Timing Control and Frequency Control>

In NR, for example, each of terminals performs timing control based on information for correcting timing, such as a Timing Advance (TA) command, indicated by a base station, such that the reception timings of signals transmitted from the terminals are aligned at the base station. That is, at each terminal, the transmission timing of an uplink signal is controlled.

In NTN, since the amount of a propagation delay changes more rapidly than in a terrestrial network as described above, a terminal calculates the round-trip delay time between the terminal and a base station, corrects the timing, and transmits a signal. Such timing correction is referred to as "timing pre-compensation".

A delay time of a radio link between a terminal and a satellite (e.g., referred to as "service link") is calculated based on, for example, location information on the terminal and information on the orbit or location of the satellite. Note that, the location information on the terminal may be acquired by, for example, a Global Navigation Satellite System (GNSS) or the like at the terminal. Further, the information on the orbit or location of the satellite may be indicated (e.g., broadcasted), for example, as "satellite ephemeris information (or also referred to as satellite ephemeris)" from a base station to the terminal.

A delay time of a radio link between a terrestrial base station or gateway (GW) and a satellite (e.g., referred to as "feeder link") is calculated, for example, at a terminal, based on a common TA parameter broadcast by the base station.

Since a delay time of a feeder link changes as a satellite moves, information on the variation in the delay time, such as common TA drift and common TA drift variation, is indicated, for example, in addition to a delay time of a feeder link at a certain point in time, as common TA parameter to the terminal.

For example, the terminal may determine value $T_{TA}$ to be used for timing control (adjustment) based on Expression 1.

$$T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}} \qquad \ldots \text{(Expression 1)}$$

In Expression 1, $N_{\mathrm{TA}}$ denotes, for example, a TA value indicated by the TA command, $N_{\mathrm{TA,offset}}$ denotes an offset for the TA value, and $T_{\mathrm{c}}$ denotes a reference time (for example, a basic time unit).

Further, in Expression 1, $N_{\mathrm{TA,adj}}^{\mathrm{common}}$ denotes a common TA value based on a feeder link delay time calculated from a common TA parameter, and $N_{\text{TA,adj}}^{\text{UE}}$ denotes a terminal-specific TA value based on a service link delay time estimated, by the terminal, from the location information on the terminal and the satellite location.

Note that, the first term and the second term of Expression 1 are defined, for example, in the 5G NR standard TS 38.211 and are the same as in Rel. 15 NR specification, and the value of $T_{TA}$ of Expression 1 is a value obtained by adding the common TA value ( $N_{\text{TA,adj}}^{\text{common}}$ ) and the terminal-specific TA value ( $N_{\text{TA,adj}}^{\text{UE}}$ ) to the values of the first term and the second term.

As described above, in NTN, a round-trip delay time in a service link and a feeder link is corrected (e.g., compensated) on the terminal side, and an uplink signal is transmitted. This allows the signal transmitted from each terminal to be received by the base station within a predetermined time difference.

Further, in NTN, a high Doppler shift may occur due to the high-speed satellite movement. The Doppler shift varies depending on the terminal location and changes from moment to moment, which may make it difficult for the base station to receive signals from a plurality of terminals. For this reason, the terminal transmits a signal at a frequency in which a Doppler shift in a service link is corrected in advance (pre-compensation). Since a Doppler shift is determined based on, for example, the satellite location, the satellite velocity, and the terminal location, a terminal may calculate the Doppler shift compensation amount based on satellite ephemeris information and location information on the terminal. Such frequency correction is referred to as "frequency pre-compensation".

<DMRS bundling>

In NR Rel. 17, DMRS (DeModulation Reference Signal) bundling is supported for PUSCH or PUCCH that is repetition-transmitted in the uplink. In the DMRS bundling, the terminal performs repetition transmission while maintaining phase continuity and power consistency across a plurality of slots. At the base station, the channel estimation accuracy is improved by performing a Joint Channel Estimation (JCE) by combining the DMRSs of those slots.

The section in which phase continuity and power consistency are maintained is referred to as a Time Domain Window (TDW). Since the time during which phase continuity and/or power consistency can be maintained varies depending on the performance of hardware (HW: HardWare), for example, analog circuitry such as a power amplifier and an oscillator of a terminal, the terminal reports the value of a TDW as an UE capability to the base station.

The base station configures a TDW to the terminal in a fixed or quasi-static manner based on a reported UE capability. A TDW to be configured is referred to as a configured TDW or a nominal TDW.

When the terminal performs repetition transmission of PUSCH, the terminal is required to maintain phase continuity and power consistency during a configured TDW.

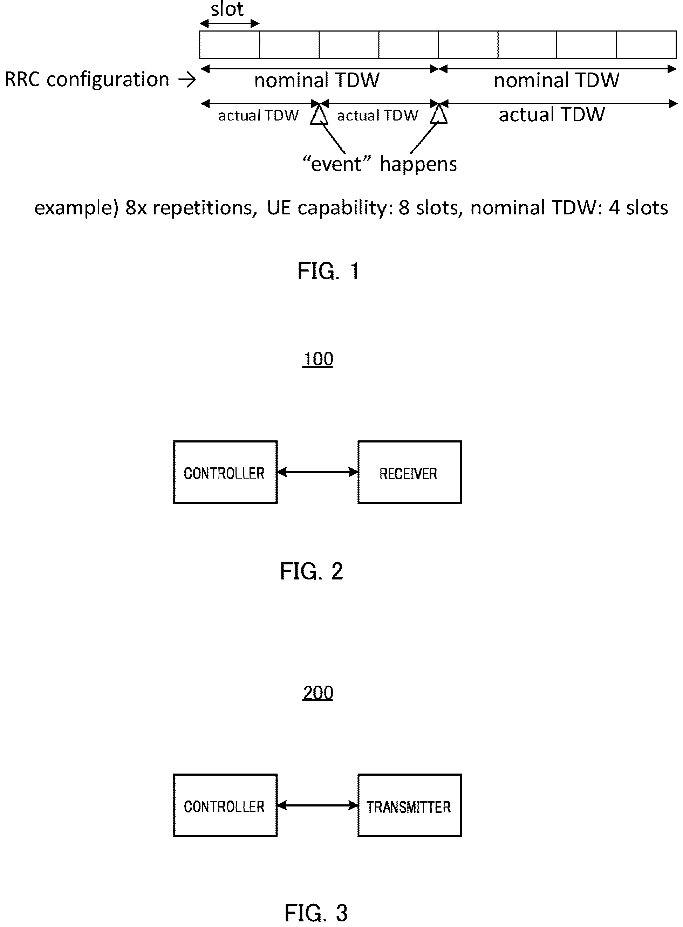

For example, as illustrated in FIG. 1, in a case where the terminal transmits PUSCH with 8 repetitions when TDW = 4 slots is configured, the terminal transmits the PUSCH while maintaining phase continuity and power consistency in the first 4 slots and the latter 4 slots.

Further, a TDW in which phase continuity and power consistency are actually maintained is referred to as an actual TDW. For example, in a case where an event, such as a transmission power change due to a transmission power control command, happens in which phase continuity and power consistency cannot be maintained, a nominal TDW may be divided into a plurality of actual TDWs. In addition to a transmission power change, the event may be, for example, a frequency resource change due to frequency hopping, a transmission timing change due to a TA command, and the like.

For example, as illustrated in FIG. 1, in a case where there is a frequency resource change due to frequency hopping after the first 2 slots, 2 slots each of the first 4 slots become an actual TDW. The terminal maintains phase continuity and power consistency within the range of an actual TDW. Details of the operation of the DMRS bundling are described in NPL 2.

<Discussion>

Since NTN involves a long-distance transmission, communication between a terminal, in a case where a terminal such as a normal smartphone is used as the terminal, and a satellite at a high altitude or with a low elevation angle may be difficult due to the low transmission output and antenna gain. For this reason, repetition transmission has been studied in 3GPP. Further, the application of the DMRS bundling has been studied for further coverage enhancement.

Further, in NTN, as described above, in order to mitigate the influence of a satellite moving at high speed, a terminal autonomously performs timing control and frequency control according to the locations of the satellite and the terminal.

Here, the propagation delay time and the variation in the Doppler shift vary depending on the location and/or elevation angle of the satellite. For example, the delay time variation per unit time (timing drift rate) decreases as the satellite moves from a low elevation angle to a high elevation angle. On the other hand, the Doppler shift variation per unit time increases as the satellite moves from a low elevation angle to a high elevation angle.

For this reason, the update period(s) for timing and/or frequency control required for suppression to a predetermined timing error varies/vary depending on the satellite location. In particular, it is required to follow a time variation in a short time compared to a frequency variation.

Further, even in a case where the uplink signal transmission timing is configured to be constant (that is, not updated) at the terminal, a phase rotation occurs due to a change in the propagation delay time when an uplink signal is received by the base station.

For this reason, there is a possibility that phase continuity cannot be maintained within a TDW configured in a fixed manner (or in a quasi-static manner) by the base station depending on the location or the elevation angle of the satellite.

Accordingly, in a method in which the value of a TDW due to the performance of HW of the terminal as described above is reported as an UE capability to the base station and the base station configures the TDW to the terminal in a fixed or quasi-static manner based on the report on the UE capability, it is difficult to perform a joint channel estimation appropriately at the base station.

The present disclosure provides a new mechanism for indicating and/or configuring a TDW.

<Outline of Communication System>

A communication system according to an exemplary embodiment of the present disclosure includes terminal 100 and base station 200.

FIG. 2 is a block diagram illustrating an exemplary configuration of a part of terminal 100. In terminal 100 illustrated in FIG. 2, the receiver (corresponding to, for example, reception circuitry) receives a report instruction regarding a TDW, in which maintenance of phase continuity and power consistency in an uplink signal is required, from base station 200. The controller (corresponding to, for example, control circuitry) determines a periodic report on the TDW based on the report instruction from base station 200.

FIG. 3 is a block diagram illustrating an exemplary configuration of a part of base station 200. In base station 200 illustrated in FIG. 3, the transmitter (corresponding to, for example, transmission circuitry) transmits a report instruction regarding a TDW, in which maintenance of phase continuity and power consistency in an uplink signal is required, to terminal 100. The controller (corresponding to, for example, control circuitry) executes a joint channel estimation based on a report, which is periodically received from terminal 100, on the TDW.

Through the above operations, it is possible to appropriately report a TDW in which phase continuity and power consistency in an uplink signal are maintained. By an appropriate report on a TDW, an appropriate joint channel estimation is performed.

Hereinafter, timing control and/or frequency control may also be referred to as timing/frequency control.

<Embodiment 1>

In Embodiment 1, the terminal reports, as an UE capability, the value of a TDW considering the performance of HW to the base station. Further, the terminal reports, to the base station each time, a TDW (possible TDW), in which phase continuity and power consistency at the terminal can be maintained, by taking into account, for example, the update period(s) (update frequency/frequencies) for the timing/frequency control that change(s) as the satellite moves.

At the base station, slots to be used for a joint channel estimation are determined based on information on a TDW included in an UE capability indicated by the terminal and information on the TDW reported each time. Further, in an allocation indication for PUSCH, the base station indicates the TDW to the terminal.

<<Configuration of Terminal>>

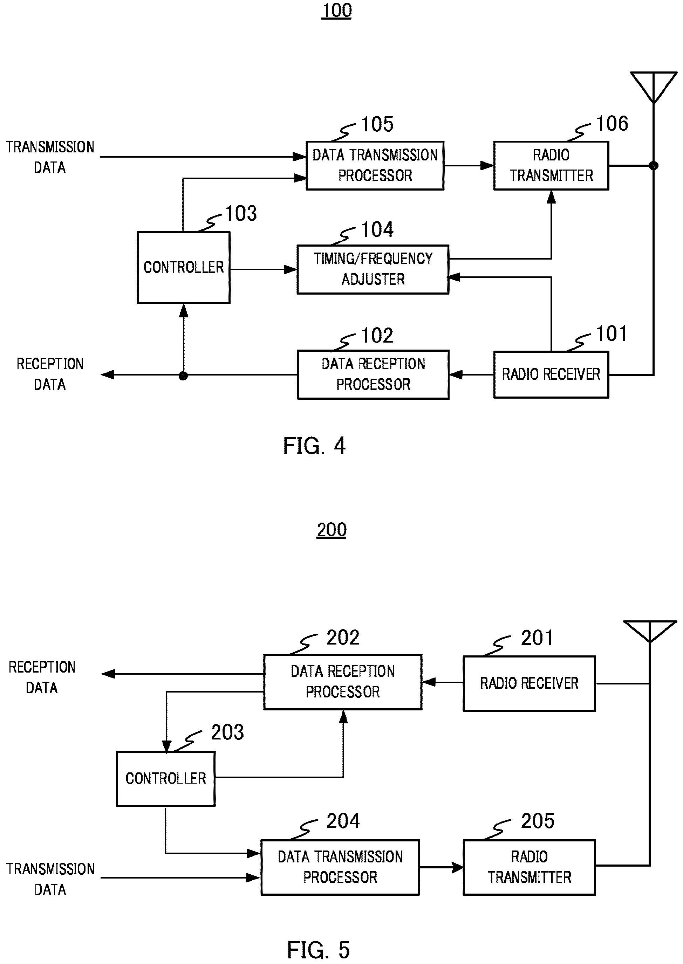

FIG. 4 is a block diagram illustrating an example of a configuration of terminal 100 according to Embodiment 1. Terminal 100 includes radio receiver 101, data reception processor 102, controller 103, timing/frequency adjuster 104, data transmission processor 105, and radio transmitter 106.

Radio receiver 101 performs analog reception processing and digital reception processing such as down-conversion, A/D conversion, and filtering on a signal received from base station 200 via the antenna, and outputs the signal to data reception processor 102. Radio receiver 101 outputs information on the reception timing of a Synchronization Signal (SS)/Physical Broadcast Channel (PBCH) Block (SSB) to timing/frequency adjuster 104.

Data reception processor 102 demodulates and decodes a downlink signal such as SSB, PDCCH, and PDSCH output from radio receiver 101. The PDCCH includes resource allocation information for PDSCH, resource allocation information for PUSCH, and resource allocation information for PUCCH used in HARQ-ACK transmission for PDSCH, and the like. In addition to user data, the PDSCH includes broadcast information such as system information, RRC control information, MAC CE control information, a RACH response (Msg2), a TA command, and the like.

Note that, PDCCH is an abbreviation for Physical Downlink Control Channel. PDSCH is an abbreviation for Physical Downlink Shared Channel. HARQ-ACK is an abbreviation for Hybrid Automatic Repeat request-Acknowledgement. RRC is an abbreviation for Radio Resource Control. MAC CE is an abbreviation for Medium Access Control Control Element. RACH is an abbreviation for Random Access Channel.

Data reception processor 102 performs reception processing on information on a TDW (for example, nominal TDW) configuration or information for enabling a TDW indication, which is included in RRC control information (such as an RRCReconfiguration message), and outputs the information to controller 103. Data reception processor 102 outputs TDW (for example, actual TDW) configuration information included in the MAC CE, PDCCH, and Msg2 to controller 103. Data reception processor 102 outputs information such as satellite ephemeris, a common TA parameter, and an Epoch time, which are included in the broadcast information, to controller 103.

Controller 103 acquires location information on terminal 100 from a GNSS or the like. Further, controller 103 calculates the orbit and location of the satellite based on information such as the satellite ephemeris and epoch time output from data reception processor 102. Controller 103 calculates a timing adjustment value (TA value) by using the round-trip delay time between the terminal and the satellite calculated from these pieces of location information and the round-trip delay time between the satellite and the base station calculated from the common TA parameter, and outputs the TA value to timing/frequency adjuster 104.

Controller 103 calculates a Doppler shift based on satellite orbit information and terminal location information on terminal 100, and outputs the Doppler shift to timing/frequency adjuster 104.

Controller 103 configures a TDW for PUSCH and PUCCH based on the TDW information received from base station 200 and output from data reception processor 102, and outputs the TDW to timing/frequency adjuster 104.

Controller 103 outputs a capability of the TDW, in which phase continuity and power consistency can be maintained, to data transmission processor 105. With respect to the capability of the TDW, the performance of HW such as radio transmitter 106 of terminal 100 is taken into account. The capability of the TDW is transmitted, for example, as an UE capability in an RRC message.

Controller 103 calculates a TDW considering the update period(s) for the timing/frequency control based on the variation rate of the propagation delay time and the variation rate of the Doppler shift at the satellite location for each instant, and outputs the TDW to data transmission processor 105. Examples of the TDW considering the update period(s) for timing/frequency control include an instantaneous TDW, a time-varying TDW, and a TDWs that depends on the satellite location. The TDW calculated by controller 103 is transmitted, for example, by MAC CE.

Timing/frequency adjuster 104 calculates a transmission timing based on the reception timing output from data reception processor 102 and the information on the timing adjustment value output from controller 103, and outputs the transmission timing to radio transmitter 106. Timing/frequency adjuster 104 calculates a frequency correction value based on the information on the Doppler shift output from controller 103, and outputs the frequency correction value to radio transmitter 106. Timing/frequency adjuster 104 does not perform an update of the transmission timing and/or an update on the frequency correction value (an update(s) on the timing/frequency control) within the section of the TDW output from controller 103, and performs an update on the transmission timing and/or an update on the frequency correction value between TDWs. Note that, even within the section of a TDW, an update(s) on timing/frequency control may be performed as long as a phase variation satisfies performance requirements.

Data transmission processor 105 performs encoding such as LDPC on the transmission data, performs modulation such as QPSK and 16QAM, adjusts the timing for a signal, which is subjected to time/frequency resource mapping, to the timing output from timing/frequency adjuster 104, and outputs the signal to radio transmitter 106.

Note that, LDPC is an abbreviation for Low-Density Parity-Check code. QPSK is an abbreviation for Quadrature Phase-Shift Keying. QAM is an abbreviation for Quadrature Amplitude Modulation.

Data transmission processor 105 performs the same encoding and modulation and time/frequency resource mapping as described above on the RRC message including information on the UE capability related to the TDW output from controller 103, and outputs the RRC message to radio transmitter 106. Data transmission processor 105 performs the same encoding and modulation and time/frequency resource mapping as described above on the MAC CE including the TDW output from controller 103 and considering the update period(s) for the timing/frequency control, and performs an outputs the MAC CE to radio transmitter 106.

Note that, a TDW considering the update period(s) for the timing/frequency control may be transmitted using higher-layer signaling such as an RRC message or L1 signaling (lower-layer signaling) such as PUCCH.

Radio transmitter 106 performs analog transmission processing and digital transmission processing such as D/A conversion, filtering, up-conversion, and amplification on the signal output from data transmission processor 105, and outputs a radio signal to the antenna. Radio transmitter 106 performs timing adjustment and frequency correction (timing/frequency control) based on the timing information, such as TA information, and the frequency correction value, which are output from timing/frequency adjuster 104.

Note that, timing/frequency adjuster 104 may adjust both or one of the timing and the frequency. Radio transmitter 106 may adjust both or one of the timing and the frequency.

<<Configuration of Base Station>>

FIG. 5 is a block diagram illustrating an example of a configuration of base station 200 according to Embodiment 1. Base station 200 includes radio receiver 201, data reception processor 202, controller 203, data transmission processor 204, and radio transmitter 205.

Radio receiver 201 performs analog reception processing and digital reception processing such as down-conversion, A/D conversion, and filtering on a signal of terminal 100 received via the antenna, and outputs the signal to data reception processor 202.

Data reception processor 202 performs a channel estimation and demodulation/decoding processing on an uplink signal such as PUSCH, PUCCH, and PRACH output from radio receiver 201, and obtains a received data sequence. At this time, data reception processor 202 performs a joint channel estimation in the section of a TDW configured by controller 203. Data reception processor 202 outputs data of an RRC message and a MAC CE included in the PUSCH to controller 203. The RRC message includes, for example, information on an UE capability related to a TDW. The MAC CE includes, for example, a TDW considering the update period(s) for the timing/frequency control.

Controller 203 generates system information (broadcast information) such as a master information block (MIB) and a system information block (SIB), and control information such as a terminal-specific RRC message. The system information includes, for example, satellite ephemeris information, a common TA parameter used for the TA of the terminal, and information such as an epoch time for NTN. The RRC message includes, for example, TDW configuration information on a nominal TDW and information for enabling a TDW indication of the terminal.

Controller 203 generates DCI or PDCCH associated with PDSCH transmission. The DCI includes, for example, information on PDSCH retransmission control such as NDI and RV, information on MCS for PDSCH and PUSCH, resource allocation information on PDSCH and PUSCH, and resource allocation information on PUCCH used in HARQ-ACK transmission for PDSCH.

Note that, DCI is an abbreviation for Downlink Control Information. NDI is an abbreviation for New Data Indicator. MCS is an abbreviation for Modulation Coding Scheme. RV is an abbreviation for Redundancy Version.

Controller 203 may include, for example, the number of repetition transmissions (repetition number) and information on a TDW such as an actual TDW in the resource allocation information described above. Controller 203 may indicate the information on a TDW in a MAC CE. Controller 203 outputs a configured TDW to data reception processor 202.

Data transmission processor 204 performs encoding such as LDPC and modulation such as QPSK and 16QAM on control information output from controller 203 and the transmission data, and outputs the control information and transmission data to radio transmitter 205.

Radio transmitter 205 performs transmission processing such as D/A conversion, filtering, up-conversion, and amplification on the signal output from data transmission processor 204, and outputs a radio signal to the antenna.

<<Exemplary Operation Flow>>

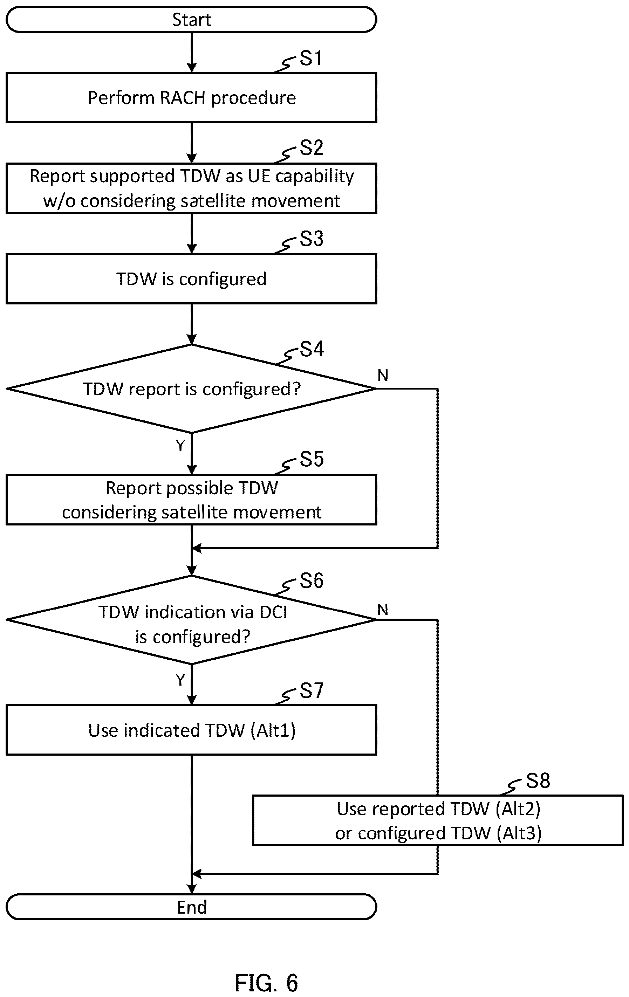

FIG. 6 is a flowchart illustrating exemplary operations of terminal 100 according to Embodiment 1. After performing initial access processing (S1) such as RACH procedure, terminal 100 indicates an UE capability of terminal 100 to base station 200 (S2). The UE capability to be indicated to base station 200 includes, for example, information on a TDW considering the performance of HW such as radio transmitter 106 of terminal 100, in which phase continuity and power consistency can be maintained.

Terminal 100 receives an RRC reconfiguration message including information on a nominal TDW (S3).

The RRC reconfiguration message may include information for enabling a TDW indication of terminal 100, a TDW indication period, and a TDW variation threshold. The RRC reconfiguration message may also include information indicative of whether to perform a TDW indication by using DCI.

Note that, terminal 100 configures, as a TDW for DMRS bundling, the nominal TDW received in S3, and does not perform an update on the timing correction value and/or an update on the frequency correction value (an update(s) on the timing/frequency control) within the TDW such that a phase change of a predetermined level or more does not occur.

Terminal 100 judges whether the RRC message received in S3 includes information for enabling a TDW report (S4).

In a case where the RRC message received in S3 includes information for enabling a TDW report (Y in S4), terminal 100 reports the TDW to base station 200 periodically (S5).

The TDW to be reported may be, for example, a TDW considering the update period(s) for the timing/frequency control for satisfying the timing and/or frequency performance specification(s) at the satellite location at the time of the report. The TDW to be reported may be, for example, a TDW considering the satellite movement.

The period for the report may be received from base station 200 via an RRC reconfiguration message. The report may be an event-triggered report rather than a periodic report. For example, a TDW report may be triggered in a case where the variation of the TDW becomes equal to or larger than a predetermined threshold. Terminal 100 may report a TDW also considering the phase rotation amount of a signal, which is received by the base station, due to a propagation delay time variation caused by the satellite movement.

In a case where the RRC message received in S3 does not include information for enabling a TDW report (N in S4), or after the report in S5, terminal 100 judges whether the RRC message received in S3 includes information indicative of performing a TDW indication by using by DCI (S6).

In a case where the RRC message received in S3 includes information indicative of performing a TDW indication by using DCI (Y in S6), terminal 100 configures a TDW at the time of PUSCH transmission based on information on the TDW included in PDCCH (DCI) transmitted from base station 200 (S7 Alt1).

In a case where the RRC message received in S3 does not include information indicative of performing a TDW indication by using DCI (N in S6), terminal 100 configures the TDW, which has been reported by terminal 100 in S5, to a TDW at the time of PUSCH transmission (S8 Alt2). Alternatively, terminal 100 configures the nominal TDW, which is indicated in the RRC message received from base station 200 in S3, to a TDW at the time of PUSCH transmission (S8 Alt3).

The exemplary operation of terminal 100 has been described above with reference to the flowchart.

Note that, in the case of Alt1 in S7, a TDW may be indicated using the following fields of DCI, for example.

- A new field is provided in DCI format 0_1 and/or DCI format 0_2 to which an uplink signal (for example, PUSCH) is allocated, and a TDW is indicated.
- The interpretation of an existing field is re-purposed and a TDW is indicated. For example, some bits in the MCS field are used to indicate one of {M, M/2, M/4, M/8} (where M is the number of slots in the nominal TDW). For example, a TDW is indicated using the higher-order two bits of the five-bit MCS field, which are namely bits indicative of a larger MCS level or modulation order. Note that, terminal 100 may indicate a TDW by using the lower bits of the MCS field. In a case where terminal 100 is a terminal with low transmission output and antenna gain, such as a smartphone, it is more useful to use the higher-order bits of the MCS field in order to support a wider coverage, whereby a lower MCS can be used.
- A TDW is indicated with the number of repetitions by using a Time Domain Resource allocation (TDRA) field.

Further, in the case of Alt2 in S8, in order to cause the same TDW to be recognized between terminal 100 and base station 200, terminal 100 uses a new TDW (the TDW reported in S5) indicated to base station 200 by using a MAC CE for PUSCH transmission scheduled with DCI after time T given by, for example, following Expression 2.

$$T = \text{slot } n + \text{Kmac} + 3 \text{ ms} \quad \text{... (Expression 2)}$$

In Expression 2, slot n denotes a PUSCH transmission slot number including a MAC CE of a TDW report. Kmac denotes the timing difference between the downlink and the uplink at base station 200 (or a reference point). Kmac is configured from base station 200 to terminal 100. 3 ms is a time considering the processing time of base station 200 and the like, and is an existing value used as a reflection timing for the MAC CE. 3 ms is an example and the present disclosure is not limited to this value.

In the flowchart of FIG. 6, terminal 100 may perform one of the operations of Alts 1 to 3 without receiving an RRC message including information indicative of performing a TDW indication by using DCI. Further, the TDW at the time of PUSCH transmission may also be an actual TDW. In a case where the RRC message received in S3 does not include information for enabling a TDW report (N in S4), terminal 100 may execute the processing of Alt3.

<<Summary of Embodiment 1>>

Terminal 100 can report an appropriate TDW to base station 200 even when the update period(s) for the timing/frequency control change(s) as the satellite moves. In other words, terminal 100 can report a TDW considering the update period(s) for the timing/frequency control to base station 200.

Base station 200 can report, based on a TDW report from terminal 100, an appropriate TDW to the terminal according to the satellite movement. Since base station 200 can appropriately configure the number of slots to be used for a joint channel estimation and perform reception, the channel estimation accuracy is improved, and it is possible to improve the error rate, throughput, and/or coverage performance.

Note that, information on a TDW considering the update period(s) for the timing/frequency control, which is generated by the controller of terminal 100, may be information on a difference from a capability of a TDW in which phase continuity and power consistency can be maintained, or may be information on a difference from a TDW (for example, a Nominal TDW) configured by base station 200. Further, the information may be information on a difference from information of a TDW considering the update period(s) for the timing/frequency control reported in the previous time.

<Embodiment 2>

In Embodiment 2, the terminal reports, as an UE capability, a TDW considering the update period(s) for the timing/frequency control, which change(s) as the satellite moves, to the base station. In other words, the terminal reports, as an UE capability, a duration, during which phase continuity and power consistency can be maintained, to the base station.

The base station estimates, based on information on a TDW included in an UE capability indicated from the terminal and a positional relationship between the satellite and the terminal, a section in which phase continuity and power consistency in an uplink signal are maintained, and determines slots to be used for a joint channel estimation.

<<Configuration of Terminal>>

The block configuration of the terminal in Embodiment 2 is the same as the block configuration in FIG. 4, but some functions of the blocks are different. Hereinafter, portions in which the functions are different will be described.

Controller 103 outputs a capability of a TDW, in which phase continuity and power consistency can be maintained, to data transmission processor 105. With respect to the capability of a TDW, the performance of HW such as radio transmitter 106 and the update period(s) for the timing/frequency control for satisfying the timing and/or frequency performance requirements associated with the satellite movement are taken into account.

The update period(s) for the timing/frequency control may vary depending on the activation or location of the satellite. For this reason, controller 103 reports, for example, the following capabilities (UE capabilities) of a TDW.

- Capability 1: a TDW based on the longest value(s) of the update period(s) for the timing/frequency control considering the satellite orbit is reported as an UE capability. The longest value of the update period is, for example, the update period when the satellite location has the highest elevation angle in the orbit.
- Capability 2: a TDW based on the shortest value(s) of the update period(s) for the timing/frequency control considering the satellite orbit is reported as an UE capability. The shortest value of the update period is, for example, the update period when the satellite location has the lowest elevation angle in the orbit.
- Capability 3: a TDW based on the average(s) or median value(s) of the update period(s) for the timing/frequency adjustment considering the satellite orbit is reported as an UE capability. The average or median value of the update period for the frequency adjustment is, for example, the update period when the average or median of the elevation angle of the satellite location is reached.

Controller 103 may report at least one of capabilities 1 to 3 as an UE capability. In a case where controller 103 reports one, two or all of capabilities 1 to 3 as an UE capability/capabilities, controller 103 may not report, by using a MAC CE, a TDW (for example, an instantaneous TDW, a time-varying TDW, and a TDW depending on the satellite location) considering the update period(s) for the timing/frequency control for each instant.

<<Configuration of Base Station>>

The block configuration of the base station in Embodiment 2 is the same as the block configuration in FIG. 5, but some functions of the blocks are different. Hereinafter, portions in which the functions are different will be described.

Controller 203 configures the number of slots (TDW) to be used for a joint channel estimation based on an UE capability of a TDW indicated from terminal 100, and outputs the number of slots to data reception processor 202. At this time, controller 203 estimates the number of slots, with which a phase variation amount is within an allowable range, by taking into account the current satellite location and terminal location, and configures the number of slots as a TDW.

<<Summary of Embodiment 2>>

Terminal 100 reports, as an UE capability, a TDW based on the update period(s) for the timing/frequency control considering the satellite orbit.

Base station 200 estimates, based on a TDW which is reported by terminal 100 and in which the satellite orbit is taken into account, a section in which phase continuity and power consistency in an uplink signal are maintained, and determines slots to be used for a joint channel estimation. Base station 200 can improve the error rate, throughput, and coverage performance by an improved channel estimation accuracy.

<<Supplement>>

Base station 200 may estimate the location of terminal 100 based on the beam transmission angle and/or the beam reception angle of the satellite, the reception timing of the satellite from terminal 100, and the like.

Terminal 100 may report information on the elevation angle of the satellite, the timing and/or frequency variation due to the satellite movement, and the periodic update(s) on the timing/frequency control to base station 200. Base station 200 may configure a TDW based on the information reported by terminal 100.

Base station 200 may indicate a configured TDW to terminal 100 in the same manner as in Embodiment 1.

Terminal 100 may report one, two or all of the UE capabilities of capabilities 1 to 3 described above to base station 200, for example, during an initial access such as RACH.

The TDW to be reported as an UE capability may vary depending on the orbit and location of the satellite. For this reason, terminal 100 may report one, two or all of the UE capabilities of capabilities 1 to 3 to base station 200 not only during the initial access but also when performing a handover or a handover involving a change of satellite.

<Embodiment 3>

In Embodiment 3, the terminal reports, as an UE capability, the value of a TDW due to the performance of HW such as a radio transmitter, that is, a TDW in which the influence of the satellite movement is not taken into account, to the base station. Alternatively, the terminal reports, as an UE capability, in addition to the performance of HW such as a radio transmitter, a TDW for satisfying a certain performance specification(s) (TDW condition(s)) related to timing and/or frequency (a TDW considering the update period(s) for the timing/frequency control) to the base station. Which to indicate may be determined by a specification or may be instructed by the base station.

The terminal performs, based on a specification or an instruction by the base station, PUSCH (data) transmission by correcting the phase rotation amount based on the propagation delay variation and/or the Doppler shift variation caused by the satellite movement.

The base station configures a TDW and the number of slots to be used for a joint channel estimation while taking account of the orbit and location of the satellite, according to the TDW condition(s) reported by the terminal and/or the presence or absence of correction of the phase rotation amount at the terminal. The base station indicates a configured number of slots (TDW) to the terminal. Alternatively, the base station estimates the phase rotation amount that occurs within a TDW based on the orbit or location of the satellite and the terminal location, corrects the phase rotation amount, and then performs a joint channel estimation.

The TDW condition(s) and the presence or absence of correction of the phase rotation amount at the terminal may be determined by a specification, may be instructed by the base station, or may be indicated as an UE capability by the terminal.

<<Configuration of Terminal>>

The block configuration of the terminal in Embodiment 3 is the same as the block configuration in FIG. 4, but some functions of the blocks are different. Hereinafter, portions in which the functions are different will be described.

Controller 103 outputs a TDW due to the performance of radio transmitter 106 to data transmission processor 105 according to a predetermined specification. In other words, controller 103 outputs a TDW not considering the influence of timing and/or frequency correction due to the satellite movement to data transmission processor 105. Further, controller 103 outputs, in addition to the performance of radio transmitter 106, a TDW for satisfying a certain performance specification(s) related to timing and/or frequency (a TDW considering the update period(s) for the timing/frequency control) to data transmission processor 105.

Controller 103 may output, based on an instruction from base station 200, both or one of a TDW due to the performance of radio transmitter 106 and a TDW considering the update period(s) for the timing/frequency control to data transmission processor 105. Controller 103 may output, to data transmission processor 105, information indicative of which TDW is reported as an UE capability.

Controller 103 outputs information indicative of whether to correct the phase rotation amount based on the propagation delay variation and/or the Doppler shift variation caused by the satellite movement to data transmission processor 105. This information may be information included in a signal received from base station 200.

Data transmission processor 105 performs transmission processing on an UE capability of a TDW output from controller 103 and/or information indicative of which TDW is indicated as an UE capability. When performing transmission processing on data, data transmission processor 105 corrects the phase rotation amount caused by the satellite movement according to information indicative of whether to correct the phase rotation amount output from controller 103.

<<Configuration of Base Station>>

The block configuration of the base station in Embodiment 3 is the same as the block configuration in FIG. 5, but some functions of the blocks are different. Hereinafter, portions in which the functions are different will be described.

Controller 203 configures the number of slots (TDW) to be used for a joint channel estimation based on a TDW condition(s) indicated by terminal 100 and a TDW, and outputs the number of slots to data reception processor 202. Controller 203 outputs information indicative of whether to correct the phase rotation amount caused by the propagation delay variation and/or the Doppler shift variation caused by the satellite movement to data reception processor 202.

Data reception processor 202 performs a joint channel estimation according to the TDW output from controller 203. Data reception processor 202 may estimate the phase rotation amount, which occurs within a TDW, from the orbit and location of the satellite, the terminal location, and the like according to the configuration by controller 203, and perform a joint channel estimation after correcting the phase rotation amount.

Data reception processor 202 performs reception processing on, in addition to an UE capability of a TDW transmitted from terminal 100, an UE capability indicative of a TDW condition(s). Data reception processor 202 performs reception processing on information indicative of whether the propagation delay variation caused by the satellite movement and/or the phase rotation amount caused by the Doppler shift variation are/is corrected on the terminal side.

Data transmission processor 204 performs transmission processing on information on TDW condition(s) indicated by terminal 100. The information is indicated to terminal 100 via, for example, an SIB or a terminal-specific RRC message. Data transmission processor 204 performs transmission processing on information for instructing correction of the phase rotation amount to terminal 100. The information is indicated to the terminal, for example, via an SIB or a terminal-specific RRC message.

<<Exemplary Operation>>

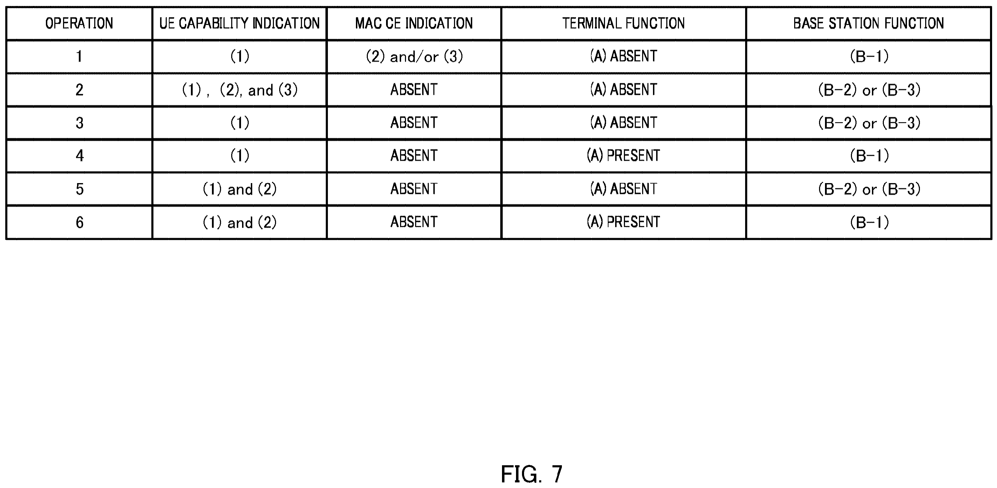

FIG. 7 is a diagram illustrating exemplary operations of terminal 100 and base station 200. The UE capabilities to be indicated by terminal 100 include the following (1) to (4).

(1) A TDW considering HW
(2) A TDW considering the update period(s) for the timing/frequency control for satisfying a certain performance specification(s) related to timing and/or frequency
(3) A TDW considering the phase rotation amount due to the propagation delay time variation performed at the base station
(4) A TDW considering the phase rotation amount due to a Doppler frequency variation performed at the base station

The functions implemented by terminal 100 include the following (A).

(A) At the terminal, the phase rotation amount in (3) or (4) above is estimated, an uplink signal is corrected, and the uplink signal is transmitted (pre-compensated)

The functions implemented by base station 200 include the following (B-1) to (B-3).

(B-1) A joint channel estimation is performed using a configured TDW without correcting the phase rotation amount in (3) or (4) above
(B-2) The phase rotation amount in (3) or (4) above is estimated, a reception signal is corrected (post-compensated), and a joint channel estimation is performed with a configured TDW
(B-3) The number of slots ($\leq$ TDW) with which a joint channel estimation is possible is estimated considering the phase rotation amount in (3) or (4) above, and a joint channel estimation is performed

Terminal 100 and base station 200 may perform Operations 1 to 6 illustrated in FIG. 7.

In Operation 1, terminal 100 indicates (1) above as an UE capability to base station 200. Terminal 100 indicates (2) and/or (3) above by using a MAC CE. Terminal 100 may not have the function (A) described above. Base station 200 has the function (B-1) described above.

In Operation 2, terminal 100 indicates (1), (2), and (3) above as UE capabilities to base station 200. Terminal 100 does not indicate (1) to (4) above by using a MAC CE. Terminal 100 may not have the function (A) described above. Base station 200 has the function (B-2) or (B-3) described above.

In Operation 3, terminal 100 indicates (1) above as an UE capability to base station 200. Terminal 100 does not indicate (1) to (4) above by using a MAC CE. Terminal 100 may not have the function (A) described above. Base station 200 has the function (B-2) or (B-3) described above.

In Operation 4, terminal 100 indicates (1) above as an UE capability to base station 200. Terminal 100 does not indicate (1) to (4) above by using a MAC CE. Terminal 100 has the function (A) described above. Base station 200 has the function (B-1) described above.

In Operation 5, terminal 100 indicates (1) and (2) above as UE capabilities to base station 200. Terminal 100 does not indicate (1) to (4) above by using a MAC CE. Terminal 100 may not have the function (A) described above. Base station 200 has the function (B-2) or (B-3) described above.

In Operation 6, terminal 100 transmits (1) and (2) above as UE capabilities to base station 200. Terminal 100 does not indicate (1) to (4) above by using a MAC CE. Terminal 100 has the function (A) described above. Base station 200 has the function (B-1) described above.

Note that, base station 200 may indicate the following information to terminal 100.

- Information on which TDW is reported
- Information on whether the terminal performs phase correction due to timing and/or frequency variation due to the satellite movement

Terminal 100 may indicate the following information to base station 200.

- Information on which TDW has been reported
- Information on whether the terminal performs phase correction due to timing and/or frequency variation due to the satellite movement

<<Summary of Embodiment 3>>

Since base station 200 can obtain information on a TDW that can be realized at each terminal under a predetermined condition(s) determined by a specification or instructed to the terminal, base station 200 can perform a joint channel estimation by using an appropriate number of slots for each terminal.

Base station 200 indicates, together with a TDW that is reported by the terminal to base station 200, information indicative of what condition(s) the TDW involves. Thus, base station 200 can recognize what processing is performed at terminal 100 and PUSCH is transmitted even in a case where the timing/frequency control and the phase correction processing implemented by terminal 100 are different (for example, whether a phase change due to a time variation of the propagation path or a Doppler frequency variation is corrected), and can perform a joint channel estimation by using an appropriate number of slots.

In a case where terminal 100 does not correct the propagation delay variation caused by the satellite movement and/or the phase rotation amount caused by the Doppler shift variation, base station 200 can perform correction of the phase rotation amount and can therefore perform appropriate phase correction.

The embodiments have been described above.

Note that, in the present disclosure, a TDW considering the performance of HW, which is reported as an UE capability by the terminal, and a TDW considering the satellite movement may be TDWs that satisfy the performance specification of Rel. 17. For example, the performance specification may be defined by the amount of phase variation allowed between two slots and between any slots.

Further, it has been described that an update on the transmission timing and/or an update on the frequency correction value (an update(s) on the timing/frequency control) are/is not performed within a TDW section, but the timing may be changed as long as the phase variation satisfies performance requirements.

An exemplary embodiment of the present disclosure is usable for satellite communications involving different types such as a Low Earth Orbit (LEO) satellite, a Medium Earth Orbit (MEO) satellite, a Highly Elliptical Orbit (HEO) satellite, or a Geostationary Earth Orbit (GEO) satellite, each having a different altitude from the Earth's surface. For example, information indicative of the relationship between the distance between terminal 100 and the satellite and the initial access resources (for example, a PRACH sequence or the number of repetitions) in Embodiments 1 and 2, as well as information indicative of the relationship between the TA value and the initial access resources (for example, a PRACH sequence or the number of repetitions) in Embodiment 3 may be individually configured for each type of satellite (or each altitude of satellite).

In the embodiments described above, the satellite ephemeris information, which is information on the satellite location, may be broadcast by the system information or held by terminal 100 in advance. Further, the satellite ephemeris information may be updated when communication is possible. Further, terminal 100 may identify the satellite location by using information that is different from the satellite ephemeris information.

In the embodiments described above, an example in which a GNSS such as GPS (e.g., position detection using a satellite signal) is utilized has been described, but the present disclosure is not limited thereto, and, for example, position detection by a terrestrial-cellular base station, position detection using a WiFi (registered trademark) signal and/or a Bluetooth (registered trademark) signal, position detection utilizing an acceleration sensor or the like, or position detection by a combination of these detection methods may be performed. Further, altitude information may be acquired from an atmospheric pressure sensor or the like.

In the embodiments described above, the base station may be read as a network or a Radio Access Network (RAN). The report may be read as an indication, and the indication may be read as a report. The calculation may be read as determination or generation. As described above, TDWs include nominal TDWs and actual TDWs. In the present disclosure, what is simply described as a "TDW" may be interpreted as both or either of a nominal TDW and an actual TDW based on the context. Alternatively, what is simply described as a "TDW" may also be interpreted as the number of slots used for a JCE at the base station. The performance of HW may include processors such as a Central Processing Unit (CPU) and a Digital Signal Processor (DSP) that execute a program. The performance of HW may be read as the performance of the terminal.

Further, in the embodiments described above, an example in which the DMRS bundling is used for an uplink signal from a terminal to a base station has been described, but the present disclosure may be applied to a case where the DMRS bundling is used for a downlink signal from a base station to a terminal.

An exemplary embodiment of the present disclosure is applicable regardless of the type of satellite, such as GEO, MEO, LEO, or HEO. Further, an exemplary embodiment of the present disclosure may be applied to non-terrestrial communication such as communication performed by a HAPS or a drone base station.

In the embodiments described above, descriptions have been given by taking the NTN environment (e.g., satellite communication environment) as an example, but the present disclosure is not limited thereto. The present disclosure may be applied to other communication environments (e.g., at least one terrestrial cellular environment in LTE and NR). For example, an exemplary embodiment of the present disclosure may be applied to terrestrial communication in an environment where the cell size is large and the propagation delay between base station 200 and terminal 100 is longer (e.g., equal to or longer than a threshold), for example.

In the embodiments described above, the mode of the satellite communication may have a configuration in which the base station functional exists on the satellite (for example, "regenerative satellite"), or may have a configuration in which the base station functional exists on the ground and the satellite relays the communication between the base station and the terminal (e.g., "transparent satellite"). For example, in an exemplary embodiment of the present disclosure, each of the downlink and the uplink may be a link between a terminal and a satellite or a link via a satellite.

A method for indicating control information from base station 200 to terminal 100 is not limited to the above-mentioned examples, and control information may be indicated (or broadcast, instructed, configured) by at least one of system information such as an MIB and an SIB, RRC control information, MAC control information, and Downlink Control Information (DCI), may be configured to terminal 100 in advance, or may be defined by a standard in advance.

The base station may be referred to as a gNodeB or a gNB. Further, the terminal may be referred to as UE.

Time resource units, such as system frames or subframes, may be replaced with slots, time slots, mini slots, frames, subframes, or the like.

Further, the notation "processor", "...er", "...or" or "...ar" in the embodiments described above may be replaced with another notation such as "... circuitry", "... device", "... unit" or "... module".

(Supplement)

Information indicative of whether terminal 100 supports the functions, operations, or pieces of processing described in the above embodiments may be transmitted (or indicated) from terminal 100 to base station 200 as capability information or a capability parameter(s) of terminal 100, for example.

The capability information may include an information element (IE) individually indicative of whether terminal 100 supports at least one of the functions, operations, or pieces of processing described in the above embodiments. Alternatively, the capability information may include an information element indicative of whether terminal 100 supports a combination of any two or more of the functions, operations, or pieces of processing described in the above embodiments.

Base station 200, for example, may judge (determine or assume), based on the capability information received from terminal 100, a function, an operations, or processing supported (or unsupported) by terminal 100 that has transmitted the capability information. Base station 200 may perform an operation, processing, or control according to the judgment result based on the capability information. For example, base station 200 may control communication for NTN, based on the capability information received from terminal 100.

Note that, the fact that terminal 100 does not support some of the functions, operations, or pieces of processing described in the above embodiments may be interpreted as a limitation on such some of the functions, operations, or pieces of processing at terminal 100. For example, information or a request on such a limitation may be indicated to base station 200.

Information on a capability or limitation of terminal 100 may be, for example, defined by a standard, or implicitly indicated, to base station 200, in association with information known at base station 200 or information transmitted to base station 200.

(Control Signals)

In the present disclosure, the downlink control signal (or downlink control information) related to an exemplary embodiment of the present disclosure may be a signal (or information) transmitted through Physical Downlink Control Channel (PDCCH) of the physical layer, for example, or may be a signal (or information) transmitted through a Medium Access Control Control Element (MAC CE) of the higher layer or the Radio Resource Control (RRC). Further, the signal (or information) is not limited to that indicated by the downlink control signal, but may be pre-defined in the specifications (or standard) or may be pre-configured for the base station and the terminal.

In the present disclosure, the uplink control signal (or uplink control information) related to an exemplary embodiment of the present disclosure may be, for example, a signal (or information) transmitted through PUCCH of the physical layer or a signal (or information) transmitted through a MAC CE of the higher layer or the RRC. Further, the signal (or information) is not limited to that indicated by the uplink control signal, and may be pre-defined in the specifications (or standard) or may be pre-configured for the base station and the terminal. The uplink control signal may be replaced with, for example, uplink control information (UCI), the 1st stage sidelink control information (SCI), or the 2nd stage SCI.

(Base Station)

In an exemplary embodiment of the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, or the like. Further, in sidelink communication, a terminal may play a role of the base station. Alternatively, the base station may be a relay apparatus that relays communication between a higher node and a terminal. The base station may be a roadside unit as well.

(Uplink/Downlink/Sidelink)

An exemplary embodiment of the present disclosure may be applied to, for example, any of uplink, downlink, and sidelink. An exemplary embodiment of the present disclosure may be applied to, for example, uplink channels, such as Physical Uplink Shared Channel (PUSCH), Physical Uplink Control Channel (PUCCH), and Physical Random Access Channel (PRACH), downlink channels, such as Physical Downlink Shared Channel (PDSCH), PDCCH or Physical Broadcast Channel (PBCH), or Physical Sidelink Shared Channel (PSSCH), Physical Sidelink Control Channel (PSCCH), and Physical Sidelink Broadcast Channel (PSBCH).

PDCCH, PDSCH, PUSCH and PUCCH are examples of a downlink control channel, a downlink data channel, an uplink data channel, and an uplink control channel, respectively. Further, PSCCH and PSSCH are examples of a sidelink control channel and a sidelink data channel, respectively. Further, PBCH and PSBCH are examples of broadcast channels, respectively, and PRACH is an example of a random access channel.

(Data Channels/Control Channels)

An exemplary embodiment of the present disclosure may be applied to, for example, any of data channels and control channels. For example, a channel in an exemplary embodiment of the present disclosure may be replaced with a data channel including any of PDSCH, PUSCH, and PSSCH or a control channel including any of PDCCH, PUCCH, PBCH, PSCCH, and PSBCH.

(Reference Signals)

In an exemplary embodiment of the present disclosure, the reference signals are signals known to both a base station and a mobile station, for example, and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an exemplary embodiment of the present disclosure, time resource units are not limited to one or a combination of slots and symbols, and may be, for example, time resource units, such as frames, superframes, subframes, slots, time slot, subslots, minislots, or time resource units, such as symbols, Orthogonal Frequency Division Multiplexing (OFDM) symbols, Single Carrier-Frequency Division Multiplexing (SC-FDMA) symbols, or other time resource units. The number of symbols included in one slot is not limited to any number of symbols exemplified in the embodiment(s) described above, and may be other numbers of symbols.

(Frequency Bands)

An exemplary embodiment of the present disclosure may be applied to any of a licensed band or an unlicensed band.

(Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

In addition, an exemplary embodiment of the present disclosure may be applied to any of a terrestrial network or a network other than a terrestrial network (NTN: Non-Terrestrial Network) using a satellite or a High Altitude Pseudo Satellite (HAPS). In addition, an exemplary embodiment of the present disclosure may be applied to a network having a large cell size, and a terrestrial network with a large delay compared with a symbol length or a slot length, such as an ultra-wideband transmission network.

(Antenna Ports)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas from the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stacks>

3GPP has been working on the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

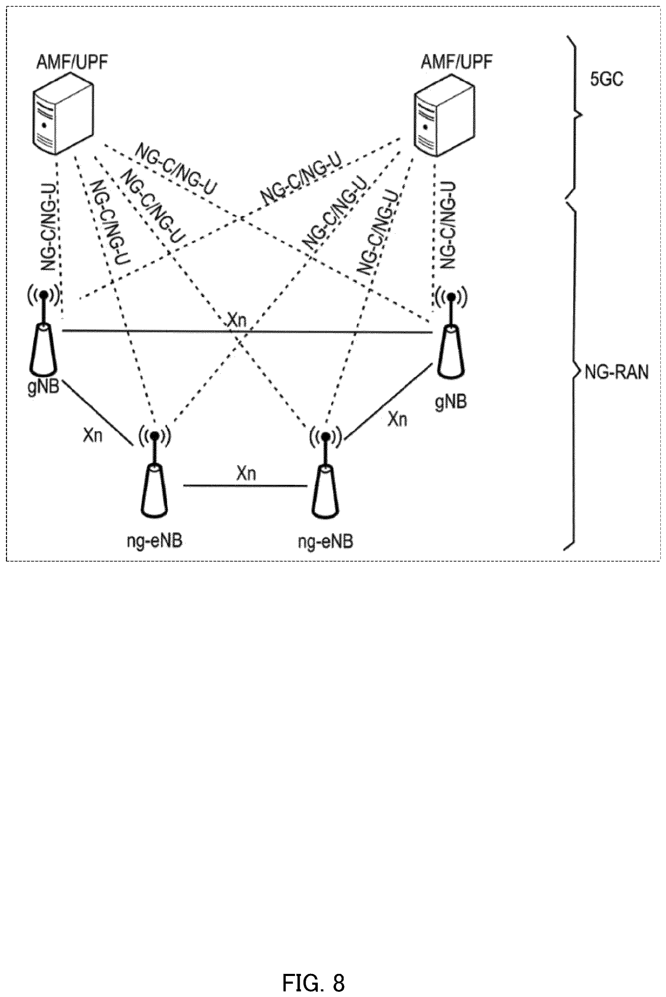

For example, the overall system architecture assumes an NG-RAN (Next Generation - Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 8 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include Physical Random Access Channel (PRACH), Physical Uplink Shared Channel (PUSCH), and Physical Uplink Control Channel (PUCCH) as uplink physical channels, and Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability ($1-10^{-5}$ within 1 ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier, a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

<5G NR Functional Split between NG-RAN and 5GC>

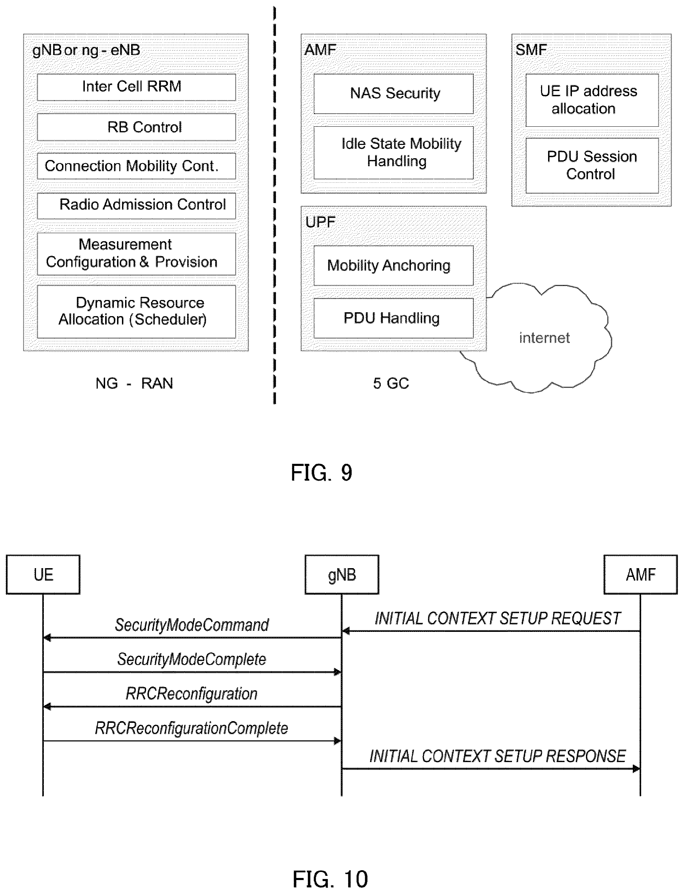

FIG. 9 illustrates functional split between NG-RAN and 5GC. NG-RAN logical node is gNB or ng-eNB. The 5GC has logical nodes AMF, UPF and SMF.

For example, the gNB and ng-eNB host the following main functions:

- Functions for Radio Resource Management such as Radio Bearer Control, Radio Admission Control, Connection Mobility Control, and Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane Data towards the UPF(s);
- Routing of Control Plane information towards AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of Network Slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network slicing; and
- Session Management Function (SMF) selection.

In addition, the User Plane Function (UPF) hosts the following main functions:

- Anchor Point for Intra-/Inter-RAT mobility (when applicable);
- External Protocol Data Unit (PDU) session point for interconnection to Data Network;
- Packet routing and forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session Management;
- UE IP address allocation and management;
- Selection and control of UPF;
- Configuration function for traffic steering at User Plane Function (UPF) to route traffic to proper destination;
- Control part of policy enforcement and QoS; and
- Downlink Data Notification.

<RRC Connection Setup and Reconfiguration Procedure>

FIG. 10 illustrates some interactions between a UE, gNB, and AMF (a 5GC Entity) in the context of a transition of the UE from RRC_IDLE to RRC_CONNECTED for the NAS part (see TS 38 300 v15.6.0).
RRC is higher layer signaling (protocol) used for UE and gNB configuration. This transition involves that the AMF prepares the UE context data (including e.g., PDU session context, the Security Key, UE Radio Capability, UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with the INITIAL CONTEXT SETUP RESPONSE.
In the present disclosure, thus, an entity (for example AMF, SMF, etc.) of a 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and a User Equipment (UE). Specifically, the gNodeB transmits Radio Resource Control (RRC) signaling including a resource allocation configuration Information Element (IE) to the UE via the signaling radio bearer. The UE then performs an uplink transmission or a downlink reception based on the resource allocation configuration.

<Usage Scenarios of IMT for 2020 and beyond>

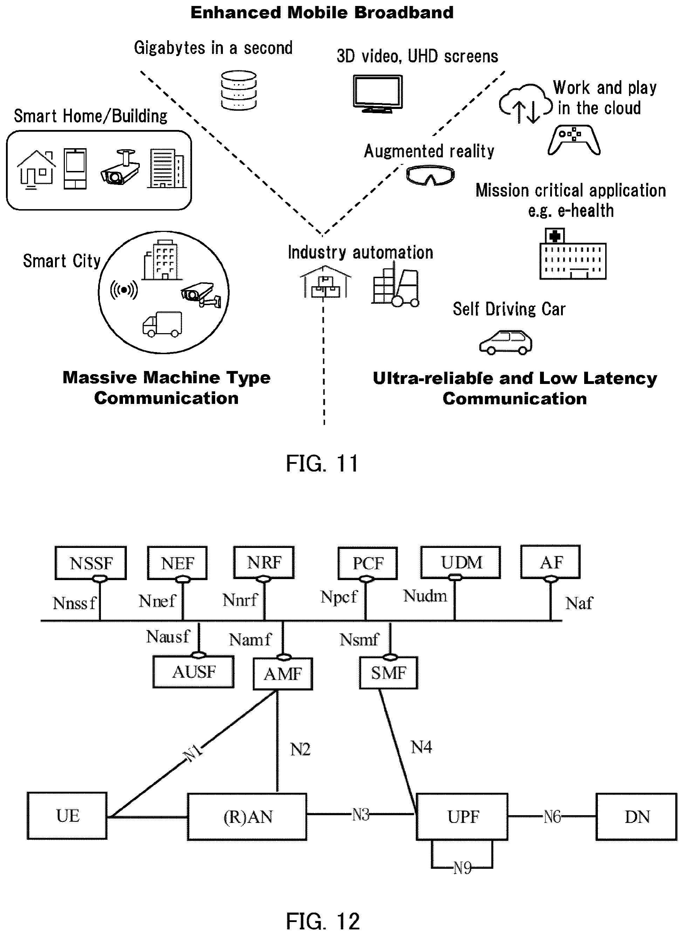

FIG. 11 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 11 illustrates some examples of envisioned usage scenarios for IMT for 2020 and beyond (see e.g., ITU-R M.2083 FIG. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to $10^{-6}$ level), higher availability, packet sizes of up to 256 bytes, time synchronization up to the extent of a few $\mu s$ (where the value can be one or a few $\mu s$ depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 10. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 12 illustrates a 5G NR non-roaming reference architecture (see TS 23.501 v16.1.0, section 4.23). An Application Function (AF) (e.g., an external application server hosting 5G services, exemplarily described in FIG. 11) interacts with the 3GPP Core Network in order to provide services, for example to support application influencing on traffic routing, accessing Network Exposure Function (NEF) or interacting with the policy framework for policy control (see Policy Control Function, PCF) (e.g., QoS control). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 12 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

As illustrated in the following appendices, the terminal reports a TDW based on the necessary update period for timing pre-compensation due to the satellite movement in order to satisfy the timing accuracy and phase continuity requirements.

<Appendix 1>

In addition to an UE capability report, the terminal occasionally reports a TDW. The base station configures the terminal such that the terminal report a TDW via a MAC CE.

The terminal reports a possible TDW, such as 1, 2, 4, 8, 16, or 32, via a MAC CE. The terminal reports a possible TDW in response to an event trigger, such as a change in the TDW by a certain value, or periodically.

The terminal may determine a TDW based on the following Alts 1 to 3.

Alt1: The terminal determines an actual TDW as instructed in DCI. The base station instructs an actual TDW via DCI that schedules PUSCH. Here, Alt1 is further based on Alt1-1 to Alt1-3.

Alt1-1: An additional field is used for instructing an actual TDW. For example, an actual TDW of 1, 2, 4, 8, 16, or 32 is instructed with a new five-bit field.

Alt1-2: An existing field is reused for instructing an actual TDW. For example, the higher-order or lower-order two bits of the MCS field instruct {M, M/2, M/4, M/8}. Here, M is the value of a configured TDW.

Alt1-3: an actual TDW is instructed with a repetition factor in a TDRA table.

Alt2: The terminal determines an actual TDW as a reported TDW. The new TDW is enabled in a PUSCH transmission scheduled by DCI transmitted after time T given by Expression 2 described above.

Alt3: The terminal determines a TDW as configured by the base station. The base station uses slots as a TDW to be reported for a joint channel estimation by implementation.

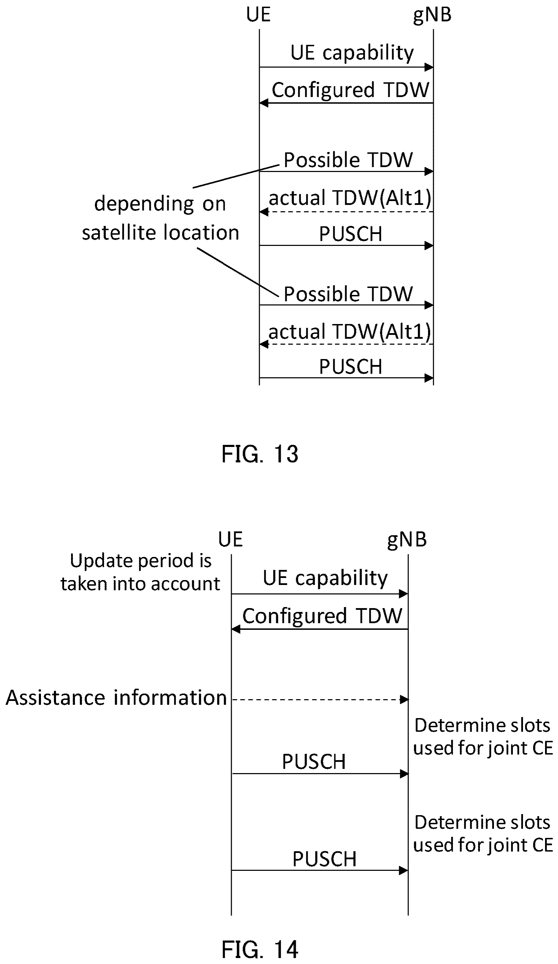

FIG. 13 is a diagram illustrating an example of a report on possible TDWs. The terminal (UE) reports an UE capability to the base station (gNB). The base station configures a configured TDW to the terminal based on the UE capability from the terminal.

In addition to the report on the UE capability, the terminal occasionally reports a possible TDW. The value of the possible TDW may depend on the satellite location.

The base station configures an actual TDW to the terminal based on the report on the possible TDW.

<Appendix 2>

In order to satisfy the timing accuracy and phase continuity requirements, the terminal reports a TDW as an UE capability based on the longest updated period for timing pre-compensation on the satellite orbit. For example, the terminal reports, as an UE capability, a TDW based on the maximum elevation angle with a low timing drift rate on the satellite orbit. In the case of performing a handover to a different satellite (or satellite orbit), the terminal reports the aforementioned TDW as an UE capability.

In order to allow the base station to appropriately determine slots used for a joint channel estimation, the terminal may report assistance information on the timing pre-compensation update rate, the timing drift rate, and/or the satellite elevation angle.

FIG. 14 is a diagram illustrating an example of a report on assistance information. As illustrated in FIG. 14, the terminal (UE) reports assistance information to the base station (gNB). The terminal may report assistance information in the case of performing a handover to a different satellite (or satellite orbit).

Note that, the terminal may report assistance information, for example, when indicating an UE capability during the initial access.

<Appendix 3>

In order to satisfy the timing accuracy and phase continuity requirements, the terminal reports a TDW as an UE capability based on the shortest updated period for timing pre-compensation on the satellite orbit. For example, the terminal reports, as an UE capability, a TDW based on the lowest elevation angle with a high timing drift rate on the satellite orbit. In the case of performing a handover to a different satellite (or satellite orbit), the terminal reports the aforementioned TDW as an UE capability.

In order to allow the base station to appropriately determine slots to be used for a joint channel estimation, the terminal may report assistance information on the timing pre-compensation update rate, the timing drift rate, and/or the satellite elevation angle.

<Appendix 4>

In order to satisfy the timing accuracy and phase continuity requirements, the terminal reports a TDW as an UE capability in a case where timing pre-compensation on the satellite orbit is not taken into account. Timing pre-compensation and/or phase adjustment on the satellite orbit are/is applied at the TDW boundary.

This means that a variation caused by HW such as an amplifier or an oscillator is taken into account, and that timing pre-compensation and/or phase adjustment on the satellite orbit are/is not taken into account.

Since the base station can recognize that the phase rotation due to the satellite movement is not pre-compensated by the terminal, the base station can estimate and adjust the phase rotation due to the timing change caused by the satellite movement.

<Appendix 5>

In order to satisfy the timing accuracy and phase continuity requirements, the terminal reports a TDW as an UE capability in a case where timing pre-compensation on the satellite orbit is not taken into account. Phase pre-compensation on the satellite orbit is continuously applied regardless of the TDW boundary, and timing pre-compensation on the satellite orbit is applied at the TDW boundary.

Since the base station can recognize that the phase rotation due to the satellite movement is pre-compensated by the terminal, the base station can perform a joint channel estimation by using TDW.

<Appendix 6>

In order to satisfy the timing accuracy and phase continuity requirements, the terminal reports a TDW as an UE capability in a case with a specific condition(s) for timing pre-compensation on the satellite orbit. Timing pre-compensation and/or phase adjustment on the satellite orbit are/is applied at the TDW boundary.

Since the base station can recognize the state of the TDW function of the terminal and can recognize that the phase rotation due to the satellite movement is not pre-compensated by the terminal, the base station can appropriately determine slots to be used for a joint channel estimation. The specific condition(s) is/are assumed to be specified as a test condition(s) for timing pre-compensation requirements.

<Appendix 7>

In order to satisfy the timing accuracy and phase continuity requirements, the terminal reports a TDW as an UE capability in a case with a specific condition(s) for timing pre-compensation on the satellite orbit. Phase pre-compensation on the satellite orbit is continuously applied regardless of the TDW boundary, and timing pre-compensation on the satellite orbit is applied at the TDW boundary.

Since the base station can recognize the state of the TDW function of the terminal and can recognize that the phase rotation due to the satellite movement is pre-compensated by the terminal, the base station can appropriately determine slots to be used for a joint channel estimation. The specific condition(s) is/are assumed to be that/those specified as a test condition(s) for timing pre-compensation requirements.

<Appendix 8>

Whether phase pre-compensation on the satellite orbit is continuously applied by the terminal may be instructed as an UE capability to the base station.

The timing pre-compensation rate is more critical than the frequency pre-compensation rate, but frequency pre-compensation may also be taken into account.

A plurality of TDW values (maximum, minimum, average, and the like) may be reported by the terminal.

The terminal may show which state of TDW (for example, Appendices 2 to 7) is reported as an UE capability.

The appendices have been described above.

A terminal according to an exemplary embodiment of the present disclosure includes: reception circuitry, which, in operation, receives a report instruction regarding a time domain in which maintenance of phase continuity and power consistency in an uplink signal is required; and control circuitry, which, in operation, determines a report, which is periodic, on the time domain based on the report instruction.

In an exemplary embodiment of the present disclosure, the control circuitry determines the time domain based on a location of a moving satellite.

In an exemplary embodiment of the present disclosure, the control circuitry maintains, after the report on the time domain, the phase continuity and the power consistency in the uplink signal in the time domain that has been instructed.

In an exemplary embodiment of the present disclosure, the control circuitry determines, based on an at least one update period for transmission timing of the uplink signal and/or frequency control, the time domain to be reported.

In an exemplary embodiment of the present disclosure, the at least one update period depends on a location of a moving satellite.

In an exemplary embodiment of the present disclosure, the control circuitry determines the time domain based on at least one of a performance of the terminal, a location of a moving satellite, a phase rotation amount due to a propagation delay time variation performed at a base station, and/or a phase rotation amount due to a Doppler frequency variation performed at the base station.

In an exemplary embodiment of the present disclosure, the control circuitry reports a type used for determining the time domain.

A base station according to an exemplary embodiment of the present disclosure includes: transmission circuitry, which, in operation, transmits a report instruction regarding a time domain in which maintenance of phase continuity and power consistency in an uplink signal is required; and control circuitry, which, in operation, executes a joint channel estimation based on a report, which is received periodically, on the time domain.

A communication method according to an exemplary embodiment of the present disclosure includes: receiving, by a terminal, a report instruction regarding a time domain in which maintenance of phase continuity and power consistency in an uplink signal is required; and determining, by the terminal, a periodic report on the time domain based on the report instruction.

A communication method according to an exemplary embodiment of the present disclosure includes: transmitting, by a base station, a report instruction regarding a time domain in which maintenance of phase continuity and power consistency in an uplink signal is required; and executing, by the base station, a joint channel estimation based on a report, which is received periodically, on the time domain.

The disclosure of Japanese Patent Application No. 2023-023753, filed on February 17, 2023, including the specification, drawings and abstract, is incorporated herein by reference in its entirety.

Industrial Applicability

An aspect of the present disclosure is useful for radio communication systems.

Reference Signs List

    100 Terminal
    101 Radio receiver
    102 Data reception processor
    103 Controller
    104 Timing/frequency adjuster
    105 Data transmission processor
    106 Radio transmitter
    200 Base station
    201 Radio receiver
    202 Data reception processor
    203 Controller
    204 Data transmission processor
    205 Radio transmitter

**Claims**

1. A terminal, comprising:

   reception circuitry, which, in operation, receives a report instruction regarding a time domain in which maintenance of phase continuity and power consistency in an uplink signal is required; and
   control circuitry, which, in operation, determines a report on the time domain based on the report instruction, the report being a periodic report.

2. The terminal according to claim 1, wherein the control circuitry determines the time domain based on a location of a moving satellite.

3. The terminal according to claim 1, wherein the control circuitry maintains, after the report on the time domain, the phase continuity and the power consistency in the uplink signal in the time domain that has been instructed.

4. The terminal according to claim 1, wherein the control circuitry determines, based on an at least one update period for transmission timing of the uplink signal and/or frequency control, the time domain to be reported.

5. The terminal according to claim 4, wherein the at least one update period depends on a location of a moving satellite.

6. The terminal according to claim 1, wherein the control circuitry determines the time domain based on at least one of a performance of the terminal, a location of a moving satellite, a phase rotation amount due to a propagation delay time variation performed at a base station, and/or a phase rotation amount due to a Doppler frequency variation performed at the base station.

7. The terminal according to claim 6, wherein the control circuitry reports a type used for determining the time domain.

8. A base station, comprising:

transmission circuitry, which, in operation, transmits a report instruction regarding a time domain in which maintenance of phase continuity and power consistency in an uplink signal is required; and
control circuitry, which, in operation, executes a joint channel estimation based on a report on the time domain, the report being received periodically.

9. A communication method, comprising:

receiving a report instruction regarding a time domain in which maintenance of phase continuity and power consistency in an uplink signal is required; and
determining a periodic report on the time domain based on the report instruction.

10. A communication method, comprising:

transmitting a report instruction regarding a time domain in which maintenance of phase continuity and power consistency in an uplink signal is required; and
executing a joint channel estimation based on a report on the time domain, the report being received periodically.

slot

RRC configuration →

nominal TDW | nominal TDW

actual TDW | actual TDW | actual TDW

"event" happens

example) 8x repetitions, UE capability: 8 slots, nominal TDW: 4 slots

## FIG. 1

100

CONTROLLER ←→ RECEIVER

## FIG. 2

200

CONTROLLER ←→ TRANSMITTER

## FIG. 3

100

FIG. 4

200

FIG. 5

```
                    ┌──────────────────────────────┐
                    │            Start             │
                    └──────────────────────────────┘
                                   │
                                   ▼          S1
                    ┌──────────────────────────────┐
                    │     Perform RACH procedure    │
                    └──────────────────────────────┘
                                   │
                                   ▼          S2
                    ┌──────────────────────────────┐
                    │ Report supported TDW as UE    │
                    │ capability w/o considering    │
                    │      satellite movement       │
                    └──────────────────────────────┘
                                   │
                                   ▼          S3
                    ┌──────────────────────────────┐
                    │       TDW is configured       │
                    └──────────────────────────────┘
                                   │
                                   ▼          S4
                         ◇ TDW report is configured? ◇──── N ────┐
                                   │ Y                            │
                                   ▼          S5                  │
                    ┌──────────────────────────────┐             │
                    │       Report possible TDW      │            │
                    │   considering satellite movement│           │
                    └──────────────────────────────┘             │
                                   │◄────────────────────────────┘
                                   ▼          S6
                         ◇ TDW indication via DCI     ◇──── N ────┐
                         ◇      is configured?         ◇           │
                                   │ Y                            │
                                   ▼          S7                  │
                    ┌──────────────────────────────┐             │
                    │     Use indicated TDW (Alt1)   │            │
                    └──────────────────────────────┘             │
                                   │                    S8        │
                                   │        ┌──────────────────────────────┐
                                   │        │   Use reported TDW (Alt2)      │
                                   │        │   or configured TDW (Alt3)     │
                                   │        └──────────────────────────────┘
                                   │◄────────────────────────────┘
                                   ▼
                    ┌──────────────────────────────┐
                    │             End              │
                    └──────────────────────────────┘
```

FIG. 6

| OPERATION | UE CAPABILITY INDICATION | MAC CE INDICATION | TERMINAL FUNCTION | BASE STATION FUNCTION |
|---|---|---|---|---|
| 1 | (1) | (2) and/or (3) | (A) ABSENT | (B-1) |
| 2 | (1), (2), and (3) | ABSENT | (A) ABSENT | (B-2) or (B-3) |
| 3 | (1) | ABSENT | (A) ABSENT | (B-2) or (B-3) |
| 4 | (1) | ABSENT | (A) PRESENT | (B-1) |
| 5 | (1) and (2) | ABSENT | (A) ABSENT | (B-2) or (B-3) |
| 6 | (1) and (2) | ABSENT | (A) PRESENT | (B-1) |

FIG. 7

FIG. 8

FIG. 9

FIG. 10

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 11

| NSSF | NEF | NRF | PCF | UDM | AF |

Nnssf | Nnef | Nnrf | Npcf | Nudm | Naf

Nausf | Namf | Nsmf

AUSF | AMF | SMF

N1 | N2 | N4

UE | (R)AN —N3— UPF —N6— DN

—N9—

FIG. 12

UE                                          gNB

UE capability

Configured TDW

Possible TDW

depending on
satellite location

actual TDW(Alt1)

PUSCH

Possible TDW

actual TDW(Alt1)

PUSCH

FIG. 13

UE                          gNB

Update period is
taken into account

UE capability

Configured TDW

Assistance information

Determine slots
used for joint CE

PUSCH

Determine slots
used for joint CE

PUSCH

FIG. 14

## INTERNATIONAL SEARCH REPORT

| International application No. |
|---|
| **PCT/JP2023/032227** |

| **A.** | **CLASSIFICATION OF SUBJECT MATTER** |
|---|---|

*H04W 24/10*(2009.01)i; *H04W 72/0446*(2023.01)i; *H04W 84/06*(2009.01)i
FI: H04W24/10; H04W72/0446; H04W84/06

According to International Patent Classification (IPC) or to both national classification and IPC

| **B.** | **FIELDS SEARCHED** |
|---|---|

Minimum documentation searched (classification system followed by classification symbols)

H04W4/00-99/00, H04B7/24-7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | PANASONIC, Discussion on coverage enhancement for NR-NTN, 3GPP TSG RAN WG1 #111 R1-2211594, Internet <URL: https://www.3gpp.org/ftp/tsg_ran/WG1_RL1/TSGR1_111/Docs/R1-2211594.zip>, 07 November 2022 <br> section 3 | 1-10 |
| A | Moderator (NTT DOCOMO, INC.), Summary #5 on 9.11.1 Coverage enhancement for NR NTN, 3GPP TSG RAN WG1 #111 R1-2212865, Internet <URL: https://www.3gpp.org/ftp/tsg_ran/WG1_RL1/TSGR1_111/Docs/R1-2212865.zip>, 21 November 2022, pages 32-36 <br> section 4.2.2 | 1-10 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2023** | **31 October 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

**Patent documents cited in the description**

- JP 2023023753 A

**Non-patent literature cited in the description**

- Solutions for NR to support non-terrestrial networks (NTN). *3GPP, TR 38.821*

- NR; Physical layer procedures for data (Release 17). *3GPP, TS 38.214*